# EUROPÄISCHE PATENTANMELDUNG

(11) **EP 3 518 053 A1**
(43) Veröffentlichungstag der Anmeldung: **31.07.2019**
(21) Anmeldenummer: 19150473.7
(22) Anmeldetag: 07.01.2019
(51) Int. Cl.: G05B 19/042, G05B 23/02

(54) **TESTGERÄT**

(30) Priorität: 30.01.2018 DE 102018201380
(71) Anmelder: Robert Bosch GmbH, 70442 Stuttgart (DE)
(72) Erfinder: Juhasz, Csaba, 1182 Budapest (HU); Finn, Gunter, 70376 Stuttgart (DE)

(57) **Zusammenfassung**

Testgerät (1) zum Testen von Sensoren (2) und/oder Aktoren sowie Steuergeräten (3) für diese Sensoren/Aktoren (2), umfassend eine analoge Schnittstelle (4) zum Verbinden mit einem Sensor/Aktor (2) und zumindest einem Steuergerät (3), eine digitale Schnittstelle (5) zum Verbinden mit einer übergeordneten Steuervorrichtung (13), und eine Steuereinheit (6) zum Signalaustausch mit dem Sensor/Aktor (2), dem Steuergerät (3) und der Steuervorrichtung (13), wobei die Steuereinheit (6) eingerichtet ist, wahlweise ein Verhalten eines Steuergeräts (3) zu simulieren, wenn zumindest ein Sensor/Aktor (2) mit der analogen Schnittstelle (4) verbunden ist, ein Verhalten zumindest eines Sensors/Aktors (2) zu simulieren, wenn zumindest ein Steuergerät (3) mit der analogen Schnittstelle (4) verbunden ist, und eine Kommunikation zwischen zumindest einem mit der analogen Schnittstelle (4) verbundenen Sensor/Aktor (2) und einer mit der digitalen Schnittstelle (5) verbundenen übergeordneten Steuervorrichtung (13) aufzuzeichnen.

## Beschreibung

### Stand der Technik

Die vorliegende Erfindung betrifft ein Testgerät zum Testen von Sensoren und/oder Aktoren sowie von Steuergeräten. Insbesondere ist mit dem Testgerät ermöglicht, je nach gewünschtem Anwendungsfall entweder Sensoren, Aktoren oder Steuergeräte zu simulieren.

Aus dem Stand der Technik sind elektronische Systeme bekannt, die Sensoren, Aktoren und Steuergeräte umfassen. Beispielsweise finden sich in Fahrzeugen oftmals Abstandsmesssysteme mit Ultraschallsensoren und zugehörigen Steuergeräten. Sollen hohe Datenmengen von einem Sensor erfasst, vorverarbeitet und in Echtzeit an das Steuergerät übertragen werden, so wird hierzu häufig ein anwendungsspezifisch integrierter Schaltkreis (ASIC) in dem Sensor und gegebenenfalls ein weiterer in dem Steuergerät eingesetzt. Solche anwendungsspezifisch integrierten Schaltkreise weisen eine geringe Baugröße auf und können in großer Stückzahl preiswert hergestellt werden. Die Entwicklung eines anwendungsspezifischen integrierten Schaltkreises ist hingegen aufwendig und lohnt sich daher nur bei großen zu fertigenden Stückzahlen.

ASIC-Schaltungen können in einem frei programmierbaren Logikgatter (FPGA) nachgebildet werden. Solche FPGAs eignen sich daher besonders zum Aufbau eines Sensorsimulators, da Änderungen der ASIC-Schaltung per Software-Update oder Hardware-Änderung vorgenommen werden können. Für einen Sensorsimulator sind weiterhin Funktionen zur Steuerung über eine Computerschnittstelle zu implementieren. Das ist in der hardwarenahen ASIC-Beschreibungssprache sehr aufwendig. Eine Kombination mit einem Mikroprozessor ermöglicht hingegen den Einsatz einer höheren Programmiersprache für die Steuerung und Kommunikation mit dem Computer. FPGAs mit integriertem Mikroprozessor bieten Vorteile für den schnellen internen Datenaustausch.

Für hochintegrierte elektronische Bausteine wie FPGA, Mikrocontroller und deren Kombinationen sind Testplatinen verfügbar. Diese enthalten neben dem zu untersuchenden Baustein verschiedene Schnittstellen zur Ansteuerung, Eingabe und Ausgabe. Testplatinen werden zur Entwicklung von elektronischen Systemen genutzt, solange die Zielhardware noch nicht verfügbar ist. Hier wird üblicherweise auf ein Gehäuse verzichtet, um leichten Zugang zu der Elektronik, insbesondere zum Messen von Signalen, zu gewähren. Die Testplatine kann aber auch Bestandteil von Prototypen oder des Produkts sein. In diesem Fall werden jedoch weitere Komponenten, wie insbesondere Gehäuse, Bedienschnittstelle, Speicher, usw., benötigt, um die Gerätearchitektur darzustellen. Testplatinen sind weniger robust gegen elektrische, mechanische und thermische Einwirkungen.

Ebenfalls aus dem Stand der Technik bekannt sind Einplatinencomputer. Bei reduzierten Anforderungen an die Echtzeitfähigkeit können miniaturisierte Computer auf einer Leiterplatte zur Ansteuerung von Sensoren und Aktoren zum Einsatz kommen. Solche Einplatinencomputer verwenden Standard-Betriebssysteme mit reduziertem Funktionsumfang. Für industrielle Anwendungen mit hohen Anforderungen an die Ausfallsicherheit können solche Einplatinencomputer deshalb nicht genutzt werden. Für ein Gesamtsystem werden weitere Hardware-Komponenten benötigt. Ein Einsatz als Sensorsimulator ist für komplexe Sensoren nicht möglich.

Der Stand der Technik kennt außerdem universelle Steuergeräte, die eine Ansteuerung verschiedener Sensoren oder Aktoren mittels verschiedener Schnittstellen ermöglichen. Für Kleinserien kann ohne hohe Entwicklungskosten eine Steuereinheit konfiguriert werden. Echtzeitkritische Systeme können damit jedoch nur sehr eingeschränkt realisiert werden, da kein FPGA vorhanden ist. Ein Einsatz als Sensorsimulator ist nicht möglich.

Sensorsimulatoren sind aus dem Stand der Technik insbesondere als softwarebasierte Simulatoren bekannt. Hierzu werden insbesondere Computerprogramme verwendet, die digitale Sensorsignale zur weiteren Verarbeitung in einem anderen Programm zur Verfügung stellen. Echtzeitkritische Systeme können auf einem herkömmlichen Computer nur sehr eingeschränkt simuliert werden. Der Anbindung an ein physisches Steuergerät sind somit sehr enge Grenzen gesetzt.

Außerdem werden analoge Schnittstellen zwischen Sensor und Steuergerät meist als Spannungsschnittstelle ausgeführt. Pegel, Baudrate und Protokoll sind individuell auf den Sensor und die zu übertragenden Daten abgestimmt. Demzufolge kann ein Sensorsimulator nur für einen Sensortyp oder eine Sensorfamilie eingesetzt werden. Sensorsimulatoren sind häufig nicht auf dem Markt frei erhältlich, sondern müssen individuell gefertigt werden. Verfügbare Geräte basieren zumeist auf einer Mikrocontroller-Architektur und sind damit nur eingeschränkt zur Simulation echtzeitkritischer Systeme geeignet.

### Offenbarung der Erfindung

Das erfindungsgemäße Testgerät ermöglicht eine Vielzahl von Anwendungen. Insbesondere ist Echtzeitfähigkeit ermöglicht. Außerdem kann das Testgerät sowohl das Verhalten von Sensoren und/oder Aktoren simulieren als auch Sensoren und/oder Aktoren ansteuern. Somit weist das Testgerät eine sehr hohe Adaptionsfähigkeit auf, ohne dass beim Erfüllungsgrad der bekannten und notwendigen Anforderungen an in der jeweiligen Branche übliche Einzelgeräte Abstriche gemacht werden müssen.

Das Testgerät zum Testen von Sensoren, Aktoren und Steuergeräten für Sensoren und/oder Aktoren umfasst eine analoge Schnittstelle, eine digitale Schnittstelle und eine Steuereinheit. Die analoge Schnittstelle dient zum Verbinden mit Sensoren und/oder Aktoren und Steuergeräten. Die digitale Schnittstelle dient zum Verbinden mit einer übergeordneten Steuervorrichtung. Die übergeordnete Steuervorrichtung kann insbesondere eine elektronische Datenverarbeitungsanlage, besonders vorteilhaft ein Personal Computer (PC) sein. Unter Verbinden ist im Rahmen dieser Erfindung stets zu verstehen, dass eine Verbindung im Sinne einer Kommunikation zum Datenaustausch herzustellen ist. Über die analoge Schnittstelle lassen sich somit analoge Signale austauschen, während über die digitale Schnittstelle digitale Signale austauschbar sind. Die Steuereinheit ist zum Signalaustausch mit dem Sensor und/oder Aktor, dem Steuergerät und der übergeordneten Steuervorrichtung eingerichtet. Außerdem ist die Steuereinheit eingerichtet, wahlweise eine der folgenden Funktionen auszuführen: Zum einen kann ein Verhalten eines Steuergeräts durch die Steuereinheit simuliert werden, was insbesondere dann durchgeführt wird, wenn zumindest ein Sensor und/oder Aktor mit der analogen Schnittstelle verbunden ist. Ebenso kann ein Verhalten zumindest eines Sensors und/oder Aktors durch die Steuereinheit simuliert werden, wenn zumindest ein Steuergerät mit der analogen Schnittstelle verbunden ist. Schließlich kann eine Kommunikation zwischen zumindest einem mit der analogen Schnittstelle verbundenen Sensor und/oder Aktor und einer mit der digitalen Schnittstelle verbundenen übergeordneten Steuereinheit aufgezeichnet werden. Die übergeordnete Steuereinheit umfasst dabei eine Simulation eines Steuergeräts. Die von dem simulierten Steuergerät an die vorhandenen Sensoren und/oder Aktoren sowie die von den Sensoren und/oder Aktoren an das simulierte Steuergerät übertragenen Daten lassen sich somit durch das Testgerät erfassen und aufzeichnen. Weiterhin ist es möglich, die Daten zu verändern. Dies kann beispielsweise zur Simulation von Datenübertragungsfehlern eingesetzt werden.

Das Testgerät erlaubt je nach Anwendungsfall entweder Sensoren und/oder Aktoren zu simulieren, um ein Steuergerät zu testen, oder ein Steuergerät zu simulieren, um Sensoren und/oder Aktoren zu testen. Ebenso ermöglicht das Testgerät sogenannte Software-in-the-Loop-Tests durchzuführen, bei denen das Steuergerät in einem Computer simuliert wird, wobei die Ausgaben des simulierten Steuergeräts über das Testgerät an physische Sensoren und/oder Aktoren ausgegeben werden können. Somit können Software-in-the-Loop-Tests unter realistischen Bedingungen ausgeführt werden, wobei das Testgerät zum Aufzeichnen der gesamten Kommunikation dient. Das Testgerät ist somit sehr universell einsetzbar und ermöglicht ein sicheres und zuverlässiges Testen unterschiedlicher Komponenten.

Die Unteransprüche haben bevorzugte Weiterbildungen der Erfindung zum Inhalt.

Die analoge Schnittstelle umfasst bevorzugt eine Simulationseinheit, wobei die Simulationseinheit einen Pegelwandler für Spannungssignale aufweist. Die Spannungssignale stammen insbesondere von einem mit der analogen Schnittstelle verbundenen Steuergerät. Ebenso weist die Simulationseinheit einen Pegelwandler für Stromsignale von zumindest einem Sensor und/oder Aktor, insbesondere von mehreren Sensoren und/oder Aktoren, auf, wobei jeder Sensor und/oder Aktor von der Steuereinheit simuliert ist. Schließlich umfasst die Simulationseinheit eine Lastsimulation eines solchen simulierten Sensors und/oder Aktors, der von dem mit der analogen Schnittstelle verbundenen Steuergerät aktuell angesteuert wird. Somit erlaubt die Simulationseinheit ein einfaches und aufwandsarmes Durchführen eines Tests eines Steuergeräts. Das Steuergerät ist insbesondere ein Steuergerät für ein Fahrzeug und kann unter realistischen Bedingungen auf seine Funktionsfähigkeit getestet werden. Dazu wird das Verhalten von angesteuerten Sensoren und/oder Aktoren durch die Steuereinheit simuliert, so dass das Steuergerät wie in einem vorgesehenen realen Einsatz verwendet werden kann. Auch können Fehlerbilder von defekten Sensoren und/oder Aktoren simuliert werden, was eine Prüfung des Steuergeräteverhaltens im Fehlerfall ermöglicht.

Die analoge Schnittstelle weist vorteilhafterweise außerdem eine Validationseinheit auf. Die Validationseinheit umfasst einen Pegelwandler für Spannungssignale von einem Steuergerät, wobei das Steuergerät von der Steuereinheit des Testgeräts simuliert ist. Außerdem umfasst die Validationseinheit einen Pegelwandler für Stromsignale von zumindest einem mit der analogen Schnittstelle verbundenen Sensor und/oder Aktor. Zusätzlich umfasst die Validationseinheit eine Spannungsversorgung des zumindest einen Sensors und/oder Aktors. Somit ist ermöglicht, an das Testgerät Sensoren und/oder Aktoren anzuschließen, wobei diese Sensoren und/oder Aktoren von einem, mittels des Testgeräts simulierten, Steuergeräts betrieben werden. Die Sensoren und/oder Aktoren werden somit analog zu einem vorgesehenen Anwendungsfall angesteuert. Dies ermöglicht insbesondere eine Erprobung sowie Qualitätsprüfung von Sensoren und/oder Aktoren. Auch können Fehlerbilder von defekten Sensoren und/oder Aktoren untersucht und analysiert werden.

Die Validationseinheit umfasst besonders vorteilhaft eine Überspannungsschutzschaltung. Die Überspannungsschutzschaltung dient zum Schutz des Testgerätes. Beispielsweise können Entladungen von Sensoren und/oder Aktoren beim Anschluss an die analoge Schnittstelle des Testgeräts kompensiert werden. Somit ist ein sicheres und zuverlässiges Handhaben speziell im Fertigungsumfeld ermöglicht.

Die Validationseinheit umfasst besonders vorteilhaft eine Echtzeituhr. Dies ermöglicht die Bereitstellung eines Zeitstempels. Damit lassen sich insbesondere im autonomen Betrieb (ohne Anschluss an eine übergeordnete Steuervorrichtung) aufgezeichnete Daten präzise analysieren.

Die Validationseinheit umfasst besonders vorteilhaft einen Temperatursensor und/oder Feuchtesensor und/oder Dampfdrucksensor. Damit lassen sich Signale der angeschlossenen Sensoren und/oder Aktoren abhängig von den Umweltbedingungen interpretieren.

Die Validationseinheit umfasst besonders vorteilhaft einen Positionssensor und/oder Beschleunigungssensor in mindestens einer Richtung. Damit lassen sich Signale der angeschlossenen Sensoren und/oder Aktoren abhängig von der Lage und/oder der Bewegung interpretieren.

Die Validationseinheit umfasst besonders vorteilhaft eine Einheit zur Auswertung von Signalen mindestens eines angeschlossenen Referenz-Sensors, der die Messgrößen der angeschlossenen Sensoren und/oder die Aktion der angeschlossenen Aktoren erfasst. Damit kann die korrekte Funktion der angeschlossenen Sensoren und/oder Aktoren verifiziert werden.

Beispielsweise kann dies zur Qualitätskontrolle in der Produktion von Ultraschallsensoren eingesetzt werden. In einer Prüfeinrichtung wird der Ultraschallsensor von der Validationseinheit zu einer Referenzmessung angeregt. Die Schallwellen treffen auf ein Mikrofon, das als Referenzhindernis die Schallwellen reflektiert und gleichzeitig als Referenzsensor die Schallwellen misst. Die reflektierten Schallwellen werden vom Ultraschallsensor empfangen und über die analoge Schnittstelle des Testgeräts an die Validationseinheit zurückgegeben. Das Mikrofon ist ebenfalls über die analoge Schnittstelle des Testgeräts mit der Validationseinheit verbunden. Die Mikrofonsignale werden in einer Verstärkerschaltung der Auswerteeinheit verarbeitet und als Referenzsignal der Steuereinheit zur Verfügung gestellt.

Die analoge Schnittstelle weist außerdem bevorzugt eine Sensor-/Aktor-Verbindungseinheit zum Verbinden mit einem Sensor und/oder Aktor auf. Die Sensor-/Aktor-Verbindungseinheit umfasst einen Pegelwandler für Spannungssignale von einem Steuergerät, wobei das Steuergerät von einer übergeordneten Steuervorrichtung, die mittels der digitalen Schnittstelle mit dem Testgerät verbunden ist, simuliert wird. Außerdem weist die Sensor-/Aktor-Verbindungseinheit einen Pegelwandler für Stromsignale auf, die von zumindest einem mit der analogen Schnittstelle verbundenen Sensor und/oder Aktor ausgesandt werden. Schließlich weist die Sensor-/Aktor-Verbindungseinheit eine Spannungsversorgung des zumindest einen Sensors und/oder Aktors auf. Somit ist ermöglicht, Software-in-the-Loop-Tests durchzuführen, indem eine Schnittstelle zwischen der übergeordneten Steuervorrichtung, die insbesondere eine elektronische Datenverarbeitungsanlage ist, und den Sensoren und/oder Aktoren bereitgestellt ist.

Des Weiteren weist die analoge Schnittstelle vorteilhafterweise eine Kabelbaumtesteinheit auf. Die Kabelbaumtesteinheit umfasst einen Pegelwandler für Spannungssignale von einem Gerät, das entweder von der Steuereinheit simuliert ist oder von einer, mit der digitalen Schnittstelle verbundenen, übergeordneten Steuervorrichtung simuliert ist. Außerdem umfasst die Kabelbaumtesteinheit einen Pegelwandler für Stromsignale von zumindest einem mit der analogen Schnittstelle verbundenen Sensor und/oder Aktor sowie eine Spannungsversorgung des zumindest einen Sensors und/oder Aktors. Zuletzt umfasst die Kabelbaumtesteinheit bevorzugt eine Messvorrichtung zum Ermitteln von elektrischen Eigenschaften der Stromsignale und der Spannungssignale. Auf diese Weise ist insbesondere ermöglicht, auf die elektrischen Eigenschaften des Kabelbaums zwischen Steuergerät und Sensoren und/oder Aktoren zu schließen. Der Kabelbaum wird dazu vorteilhafterweise anstatt mit dem Steuergerät mit dem Testgerät verbunden.

Die analoge Schnittstelle weist vorteilhafterweise außerdem eine Loggingeinheit auf. Die Loggingeinheit umfasst eine Schaltung, die unterschiedliche Ein-bzw. Ausgänge der analogen Schnittstelle miteinander verbindet. Damit ist es ermöglicht, an der analogen Schnittstelle ein Steuergerät und mindestens einen Sensor und/oder Aktor anzuschließen, die über die Loggingeinheit miteinander verbunden sind. Die Loggingeinheit umfasst weiterhin eine Schaltung zum Auskoppeln, und insbesondere Aufzeichnen, der Signale zwischen Steuergerät und angeschlossenen Sensoren und/oder Aktoren. Die Loggingeinheit umfasst außerdem einen Pegelwandler für die ausgekoppelten Spannungssignale von dem angeschlossenen Steuergerät und einen weiteren Pegelwandler für Stromsignale von zumindest einem angeschlossenen Sensor und/oder Aktor.

Dies ermöglicht insbesondere, die Kommunikation zwischen Steuergerät und Sensoren und/oder Aktoren zu überwachen.

Die Loggingeinheit umfasst besonders vorteilhaft eine Einheit zur Messung der elektrischen Eigenschaften der Spannungsversorgung der angeschlossenen Sensoren und/oder Aktoren und/oder der Signalleitungen.

Die analoge Schnittstelle weist bevorzugt eine Steckerverbindung zum physischen Anschließen des zumindest einen Sensors und/oder Aktors und des Steuergeräts auf. Dabei ist vorgesehen, dass die Simulationseinheit und die Validationseinheit und die Sensor-/Aktor-Verbindungseinheit und die Kabelbaumtesteinheit als separate Elemente ausgebildet sind. Insbesondere sind diese separaten Elemente einzelne Steckkarten, die zur Datenübertragung zwischen die Steckerverbindung und die Steuereinheit einbringbar sind. Durch die Möglichkeit des Einbringens der Simulationseinheit, der Validationseinheit, der Sensor-/Aktor-Verbindungseinheit und der Kabelbaumtesteinheit zwischen die Steckerverbindung und die Steuereinheit ist somit einfach und aufwandsarm ermöglicht, das Testgerät für einen vorgesehenen Anwendungsfall zu konfigurieren. Somit müssen nicht stets sämtliche Anwendungsfälle vorgehalten werden, sondern es wird stets diejenige Funktion verwendet, die für einen aktuellen Anwendungsfall benötigt ist. Somit weist das Testgerät eine hohe Robustheit gegenüber Einflüssen auf, da die Anzahl der Komponenten minimiert ist.

Die digitale Schnittstelle weist bevorzugt genau einen Verbindungsanschluss zum Verbinden mit der übergeordneten Steuervorrichtung auf. Die Steuervorrichtung ist insbesondere eine elektronische Datenverarbeitungsanlage. Somit ist sichergestellt, dass aufgrund des nur einen vorhandenen Verbindungsanschlusses die Verbindung zwischen Testgerät und übergeordneter Steuervorrichtung sehr robust gegenüber Störungen ist.

Besonders bevorzugt weist die digitale Schnittstelle für jeden unterschiedlichen Standard, nach dem eine Datenübertragung stattfinden soll, einen eigenen Adapter auf, der den Verbindungsanschluss enthält. Jeder Verbindungsanschluss ist daher wahlweise nach einem unterschiedlichen Standard ausgeführt. Insbesondere kann der Verbindungsanschluss ein USB-Anschluss oder ein CAN-Anschluss oder ein Ethernet-Anschluss oder ein RS-232-Anschluss oder ein IEEE-802.11-Anschluss oder ein IEEE 802.15.1-Anschluss oder ein RS-485-Anschluss sein. Weitere Standards bei dem Ausgestalten der Verbindung zwischen digitaler Schnittstelle und übergeordneter Steuervorrichtung sind ebenfalls möglich, wobei auch hier jeweils ein eigener Adapter bereitgestellt ist. Die digitale Schnittstelle hat den Vorteil, dass eine Anbindung der übergeordneten Steuervorrichtung nur einmalig zu implementieren ist und anschließend für eine große Vielzahl von unterschiedlichen Testanwendungen zur Verfügung steht. Durch die flexible Verwendung des Testgeräts ist somit der Entwicklungsaufwand für die Entwicklung von Sensoren und/oder Aktoren und zugehörigen Steuergeräten minimiert.

Vorteilhafterweise weist das Testgerät eine Anzeigevorrichtung zum Anzeigen von durch die Steuereinheit generierten Informationen auf. Außerdem weist das Testgerät eine Eingabevorrichtung zum Eingeben von Befehlen an die Steuereinheit auf. Somit ist das Testgerät auch selbstständig verwendbar, ohne dass eine Steuerung von außen, insbesondere durch eine übergeordnete Steuervorrichtung, erfolgen muss.

Besonders vorteilhaft weist das Testgerät ein Gehäuse auf, wobei sämtliche Komponenten des Testgeräts innerhalb des Gehäuses angeordnet sind. Somit ist das Testgerät robust gegen äußere Einflüsse.

### Kurze Beschreibung der Zeichnung

Nachfolgend werden Ausführungsbeispiele der Erfindung unter Bezugnahme auf die begleitende Zeichnung im Detail beschrieben. In der Zeichnung ist:

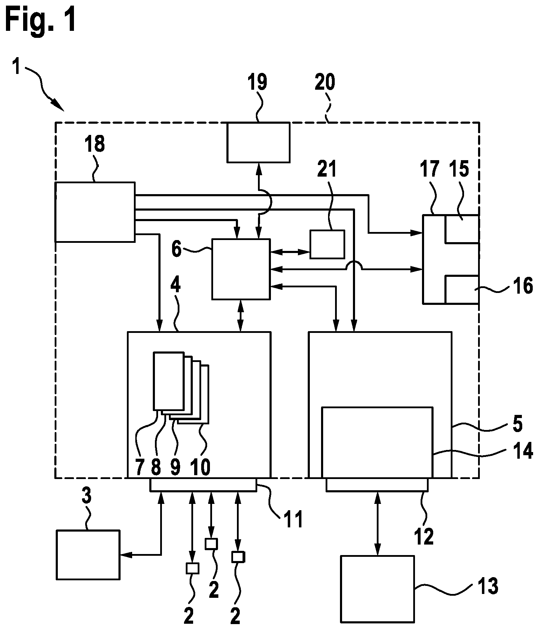

- Figur 1: eine schematische Abbildung eines Testgeräts gemäß einem Ausführungsbeispiel der Erfindung.

### Ausführungsformen der Erfindung

Figur 1 zeigt schematisch ein Testgerät 1 gemäß einem Ausführungsbeispiel der Erfindung. Das Testgerät 1 umfasst eine Steuereinheit 6, wobei die Steuereinheit 6 als FPGA mit integriertem Mikrocontroller ausgebildet ist. Die Steuereinheit 6 dient zum Ansteuern einer analogen Schnittstelle 4 sowie einer digitalen Schnittstelle 5. Über die digitale Schnittstelle 5 ist eine übergeordnete Steuervorrichtung 13, insbesondere eine elektronische Datenverarbeitungsanlage, mit dem Testgerät 1 verbindbar. Über die analoge Schnittstelle 4 sind Sensoren 2 und/oder Aktoren und Steuergeräte 3 verbindbar, wobei mittels der Steuergeräte 3 ohne Verwendung des Testgeräts 1 die Sensoren 2 und/oder Aktoren gemäß ihrer vorgesehenen Funktion ansteuerbar wären.

Des Weiteren umfasst das Testgerät 1 eine Spannungsversorgung 18, um Komponenten des Testgeräts 1 mit elektrischer Energie zu versorgen. Über eine Benutzerschnittstelle 17, die eine Anzeigevorrichtung 15 und eine Eingabevorrichtung 16 umfasst, sind Eingaben von und Ausgaben an einen Benutzer ermöglicht. Schließlich ist ein Datenträgeranschluss 19 vorhanden, insbesondere zum Verbinden einer SD-Karte, um einerseits eine Firmware und Konfigurationsdateien, andererseits um Log-Dateien zu speichern.

Besonders vorteilhaft ist außerdem ein RAM-Speicher 21 vorhanden. Der RAM-Speicher 21 dient insbesondere zum Speichern einer Firmware zum Betreiben des Testgeräts 1. So ist insbesondere ermöglicht, die Firmware beim Starten des Testgeräts 1 über den Datenträgeranschluss 19 von einem Datenträger, beispielsweise der SD-Karte, in den RAM-Speicher 21 zu laden. Dies ermöglicht, die für einen gewünschten Anwendungsfall notwendige Firmware einfach und aufwandsarm zu verwenden. So ist lediglich der Datenträger mit der gewünschten Firmware mit dem Datenträgeranschluss 19 zu koppeln. Durch das Laden der Firmware in den RAM-Speicher 21 kann die Steuereinheit 6 schnell und zuverlässig auf die Firmware zugreifen. Der RAM-Speicher wird insbesondere beim Ausschalten des Testgeräts 1 gelöscht oder freigegeben.

Die analoge Schnittstelle 4 und die digitale Schnittstelle 5 weisen austauschbare Komponenten auf, um unterschiedliche Funktionen realisieren zu können. Alle diese Funktionen sind vorteilhafterweise in der Steuereinheit 6 implementiert oder in einem an dem Datenträgeranschluss 19 anschließbaren Datenträger gespeichert. Auf diese Weise ist wird eine Vielzahl von unterschiedlichen Anwendungsmöglichkeiten des Testgeräts 1 bereitgestellt.

Die digitale Schnittstelle 5 weist bevorzugt einen separaten Adapter 14 auf. Über den Adapter 14 ist ein Verbindungsanschluss 12 bereitgestellt, über den eine Verbindung mit einer übergeordneten Steuervorrichtung 13 ermöglicht ist. Dabei ist vorgesehen, dass die digitale Schnittstelle 5 genau einen aktiven Adapter 14 aufweist, wobei der Adapter 14 genau einen Verbindungsanschluss 12 umfasst. Es ist vorgesehen, dass das Testgerät 1 eine Vielzahl von Adaptern 14 umfasst, wobei je nach Anwendungsfall derjenige Adapter 14 mit dem gewünschten Verbindungsanschluss 12 verwendet wird. Dies wird insbesondere dadurch erreicht, dass die digitale Schnittstelle einen Sockel aufweist, in den der jeweils zu verwendende Adapter 14 einsteckbar ist. Somit lassen sich Verbindungsanschlüsse 12 mit unterschiedlichen Standards bereitstellen. Je nach dem gewünschten Standard wird der entsprechende Adapter 14 zusammen mit der digitalen Schnittstelle 5 verwendet. Insbesondere kann ein Adapter einen USB-Anschluss oder einen CAN-Anschluss oder einen Ethernet-Anschluss oder einen RS-232-Anschluss oder einen IEEE 802.11-Anschluss oder einen IEEE 802.15.1-Anschluss oder einen RS-485-Anschluss als Verbindungsanschluss 12 aufweisen.

Über die digitale Schnittstelle 5 ist eine digitale Signalübertragung zwischen Steuereinheit 6 und übergeordneter Steuervorrichtung 13 ermöglicht. Auf diese Weise lassen sich insbesondere Steuerbefehle von der übergeordneten Steuervorrichtung 13 an die Steuereinheit 6 übertragen. Ebenso ist ermöglicht, dass mittels der übergeordneten Steuervorrichtung 13 Software-in-the-Loop-Tests durchgeführt werden können, in dem Sensoren 2 und/oder Aktor, die über die analoge Schnittstelle 4 mit dem Testgerät 1 verbunden sind, von einem mittels der übergeordneten Steuervorrichtung 13 simulierte Steuergerät 3 angesteuert werden. In diesem Fall sind lediglich Sensoren 2 und/oder Aktoren mit der analogen Schnittstelle 4 zur Datenübertragung verbunden.

Die analoge Schnittstelle 4 weist bevorzugt eine Steckerverbindung 11 zum Anschließen von zumindest einem Sensor 2 und/oder Aktor und zumindest einem Steuergerät 3 auf. Dabei ist insbesondere vorgesehen, dass entweder mehrere Sensoren 2 und/oder Aktoren oder ein Steuergerät 3 gleichzeitig an die analoge Schnittstelle 4 und damit an die Steckerverbindung 11 angeschlossen werden können. Zwischen die Steckerverbindung 11 und die Steuereinheit 6 ein zusätzliches Element einbringbar. Dies bedeutet, dass Signale beim Verlauf von der Steckerverbindung 11 zu der Steuereinheit 6 und umgekehrt stets durch das zusätzliche Element verlaufen müssen. Bei diesem zusätzlichen Element handelt es sich insbesondere um eine Simulationseinheit 7, um eine Validationseinheit 8, um eine Sensor-/Aktor-Verbindungseinheit 9, und/oder um eine Kabelbaumtesteinheit 10, jeweils wie zuvor beschrieben. Das Anbringen zwischen Steckerverbindung 11 und Steuereinheit 6 wird besonders bevorzugt derart erreicht, dass die analoge Schnittstelle 4 zwei Steckverbindungen aufweist, wobei eine der Steckverbindungen mit der Steckerverbindung 11 und die andere Steckverbindung mit der Steuereinheit 6 verbunden ist. Die beiden Steckverbindungen werden, insbesondere mechanisch und signaltechnisch, durch die zuvor beschriebenen Einheiten verbunden, so dass die analoge Schnittstelle 4 wahlweise unterschiedliche Aufgaben wahrnehmen kann.

Die Simulationseinheit 7 dient zum Simulieren von Sensoren 2 und/oder Aktoren. Somit ist mittels der Steckerverbindung 11 ein Steuergerät 3 mit dem Testgerät 1 verbindbar. Beispielsweise lassen sich mittels der Simulationseinheit 7 bis zu 16 Sensoren 2 und/oder Aktoren simulieren. Dies bedeutet, dass die Steuereinheit 6 Signale an die Simulationseinheit 7 ausgibt, die von der Simulationseinheit 7 in solche Signale umgewandelt werden, die üblicherweise von Sensoren 2 und/oder Aktor ausgesandt werden. Gleiches gilt in umgekehrter Richtung, in der die Simulationseinheit 7 Signale von dem Steuergerät 3 empfängt und an die Steuereinheit 6 weiterleitet. Dazu weist die Simulationseinheit 7 einen Pegelwandler für Spannungssignale von dem mit der analogen Schnittstelle 4 verbundenen Steuergerät 3 sowie einem Pegelwandler für Stromsignale von zumindest einem von der Steuereinheit 6 simulierten Sensor 2 und/oder Aktor auf. Außerdem weist die Simulationseinheit 7 eine Lastsimulation auf, mit der eine Belastung einer Sensorversorgungsleitung und/oder Aktorversorgungsleitung, die von dem Steuergerät 3 normalerweise zu jedem Sensor 2 und/oder Aktor verläuft, simuliert wird. Die Simulation der Belastung erfolgt für aktive Sensoren 2 und/oder Aktoren, wobei unter aktivem Sensor 2 und/oder Aktor ein solcher Sensor 2 und/oder Aktor verstanden wird, der aktuell von dem Steuergerät 3 angesteuert wird.

Mittels der Simulationseinheit 7 ist somit ermöglicht, eine Erprobung des Steuergeräts 3 durchzuführen. Beispielsweise kann das Steuergerät 3 ein Steuergerät für Ultraschallsensoren sein, so dass mittels der Simulationseinheit 7 ein Steuergerät eines Park- und Manöverassistenzsystems für Fahrzeuge getestet werden kann. Vorteilhaft lassen sich somit auf einfache Art und Weise Softwaretests und Systemtests ausführen.

Die Validationseinheit 8 dient insbesondere zum Simulieren eines Steuergeräts 3. Mittels der Validationseinheit 8 lassen sich Sensoren 2 und/oder Aktoren, beispielsweise Ultraschallsensoren, in unterschiedlichen Betriebsarten unter veränderlichen Umweltbedingungen ansteuern. Dazu werden eine Vielzahl von Sensoren 2 und/oder Aktoren mittels der Steckerverbindung 11 der analogen Schnittstelle 4 mit dem Testgerät 1 verbunden. Ein Steuergerät 3 wird von der Steuereinheit 6 des Testgeräts 1 simuliert. Somit dient die Validationseinheit 8 zum Wandeln der Signale der Steuereinheit 6 in solche Signale, die üblicherweise ein Steuergerät 3 unmittelbar an die Sensoren 2 und/oder Aktoren ausgibt. Ebenso dient die Validationseinheit 8 zum Weiterleiten der von den Sensoren 2 und/oder Aktoren empfangenen Signale an die Steuereinheit 6.

Dazu umfasst die Validationseinheit 8 einen Pegelwandler für Spannungssignale von einem von der Steuereinheit 6 simulierten Steuergerät 3 und für Stromsignale von zumindest einem mit der analogen Schnittstelle 4 verbundenen Sensor 2 und/oder Aktor. Außerdem umfasst die Validationseinheit 8 eine Spannungsversorgung der mittels der Steckverbindung 11 mit der analogen Schnittstelle 4 verbundenen Sensoren 2 und/oder Aktoren. Vorteilhafterweise kann die Validationseinheit 8 auch eine Überspannungsschutzschaltung aufweisen, um somit einen Überspannungsschutz zu gewährleisten.

Soll, wie im vorherigen Beispiel, mittels des Testgeräts 3 ein Ultraschallsensorsystem getestet werden, so lassen sich die Ultraschallsensoren an das Testgerät 1 anschließen, um somit eine Erprobung und eine Qualitätsprüfung der Ultraschallsensoren durchführen zu können. Auch können insbesondere Bandende-Prüfungen der Ultraschallsensoren nach Einbau in die finale Position in einem Fahrzeug getestet werden.

Die Validationseinheit 8 umfasst vorteilhafterweise außerdem einen Pegelwandler für Eingangssignale und Ausgangssignale eines Temperatursensors auf. Ebenso ist bevorzugt eine Echtzeituhr vorgesehen, um Zeitstempel zu erzeugen. Somit lassen sich auch Daten aufzeichnen, die mittels eines Zeitstempels versehen sind, wobei ebenso eine Temperatur während der Messung bekannt ist. Somit lassen sich umfassend Daten aufzeichnen und über die Datenträgerschnittstelle 19 auf einem Datenträger speichern.

Die Sensor-/Aktor-Verbindungseinheit 9 dient insbesondere zum Ansteuern von Sensoren 2 und/oder Aktoren während eines Software-in-the-Loop-Tests. Dazu sind an der analogen Schnittstelle 4 mittels der Steckerverbindung 11 mehrere Sensoren 2 und/oder Aktoren, zumindest jedoch ein Sensor 2 und/oder Aktor, verbunden. Über die digitale Schnittstelle 5 ist eine übergeordnete Steuervorrichtung 13 verbunden, wobei die übergeordnete Steuervorrichtung 13 vorteilhafterweise eine elektronische Datenverarbeitungsanlage ist. Über die übergeordnete Steuervorrichtung 13 wird eine Software des Steuergeräts 3, wobei die Ausgabesignale von dem Testgerät 1, insbesondere von der Sensor-/Aktor-Verbindungseinheit 9, in solche Signale gewandelt werden, wie sie ein physisches Steuergerät 3 unmittelbar an die Sensoren 2 und/oder Aktoren senden würde. Die Steuereinheit 6 dient in diesem Fall insbesondere zum Aufzeichnen der Kommunikation zwischen Sensoren 2 und/oder Aktoren und übergeordneter Steuervorrichtung 13.

Dazu weist die Sensor-/Aktor-Verbindungseinheit 9 einen Pegelwandler für Spannungssignale auf, wobei die Spannungssignale von einer über die digitale Schnittstelle 5 verbundenen übergeordneten Steuervorrichtung 13 generiert werden. Die Spannungssignale entstehen insbesondere durch eine Simulation des Steuergeräts 3 auf der übergeordneten Steuervorrichtung 13. Außerdem weist die Sensor-/Aktor-Verbindungseinheit 9 einen Pegelwandler für Stromsignale von dem zumindest einen mit der analogen Schnittstelle verbundenen Sensor 2 und/oder Aktor auf. Schließlich weist die Sensor-/Aktor-Verbindungseinheit 9 eine Spannungsversorgung der an die analoge Schnittstelle 4 angeschlossenen Sensoren 2 und/oder Aktoren auf.

Die Sensor-/Aktor-Verbindungseinheit 9 weist vorteilhafterweise einen anwendungsspezifischen integrierten Schaltkreis auf, über den Signale der Steuereinheit 6 in ein proprietäres Kommunikationsprotokoll zwischen Steuergerät 3 und Sensoren 2 und/oder Aktoren wandelbar ist. Außerdem werden die entsprechenden Pegel in die erforderlichen Pegel gewandelt.

Die Sensor-/Aktor-Verbindungseinheit 9 kann auch als Direct-Sensor-Gate ausgebildet sein, um eine direkte Ansteuerung von Sensoren 2 durch die übergeordnete Steuervorrichtung 13 zu ermöglichen. Auf diese Weise lassen sich insbesondere Sensoren 2 charakterisieren, oder alternativ können Funktionen entwickelt und geprüft werden.

Mittels der Kabelbaumtesteinheit 10 ist ermöglicht, elektrische Eigenschaften des Kabelbaums, der zur Verbindung von Steuergerät 3 und Sensoren 2 und/oder Aktoren dienen soll, zu überprüfen. Dazu wird anstelle des Steuergeräts 3 an dem Kabelbaum das Testgerät 1 angeschlossen. Dies bedeutet, dass die Sensoren 2 und/oder Aktoren, die mittels des Kabelbaums an das Steuergerät 3 angebunden werden sollen, an das Testgerät 1 angeschlossen sind. Somit steuert die Kabelbaumtesteinheit 10 die Sensoren 2 und/oder Aktoren an und erfasst die elektrischen Eigenschaften der ausgesendeten und empfangenen Signale.

Dazu weist die Kabelbaumtesteinheit 10 einen Pegelwandler für Spannungssignale von einem Steuergerät 3 auf. Das Steuergerät 3 wird simuliert, entweder von einer übergeordneten Steuervorrichtung 13, die über die digitale Schnittstelle 5 angebunden ist, oder von der Steuereinheit 6. Außerdem umfasst die Kabelbaumtesteinheit 10 einen Pegelwandler für Stromsignale von zumindest einen mit der analogen Schnittstelle 4 verbundenen Sensor 2 und/oder Aktor. Schließlich umfasst die Kabelbaumtesteinheit 10 eine Spannungsversorgung der mittels der Steckerverbindung 11 verbundenen Sensoren 2 und/oder Aktoren sowie eine Messvorrichtung zum Ermitteln von elektrischen Eigenschaften der Stromsignale und der Spannungssignale.

Sämtliche Komponenten des Testgeräts 1 sind insbesondere in einem Gehäuse 20 angeordnet. Das Gehäuse 20 dient zum Schutz sämtlicher Komponenten vor äußeren Einflüssen. Somit ist das Testgerät 1 sowohl für Laborumgebungen als auch für Werkstattumgebungen oder Produktionsumgebungen geeignet.

Mittels des Testgeräts 1 lassen sich insbesondere die folgenden Anwendungsfälle realisieren:
Bei der Entwicklung von Steuereinrichtungen (System, Hardware, Software) muss das Verhalten von angeschlossenen Systemkomponenten (z. B. Sensoren, Aktoren, Verkabelung) in verschiedenen Betriebszuständen und bei Fehlverhalten simuliert werden. Dies ist notwendig, da Systemkomponenten noch nicht verfügbar sind (parallele Entwicklung), Zustände (interne Fehler) zerstörungsfrei nicht erreicht werden können oder interne Größen von außen eingestellt werden sollen (durch Simulationssoftware auf Test-PC). Der Simulator kommuniziert über die gleiche Schnittstelle und das gleiche Protokoll wie die simulierte Systemkomponente mit der Steuereinrichtung.

Zum Test der Fehlerbehandlung (Rückfallebenen) durch das Steuergerät 3 müssen mögliche Abweichungen der angeschlossenen Systemkomponenten vom Nominalverhalten simuliert werden können. Für funktionale Tests (Algorithmen, Parameter) und nicht-funktionale Tests (Speicherauslastung, Laufzeitbedarf) sind dynamisch über die digitale Schnittstelle interne Größen der simulierten Systemkomponente in Echtzeit einstellbar (Prüfstand, Hardware-in-the-Loop, Vehicle-in-the-Loop).

Für die Erprobung des Steuergeräts 3 sollen elektrische und thermische Größen in verschiedenen Betriebszuständen über längere Zeiträume bei unterschiedlichen Umweltbedingungen gemessen und dokumentiert werden. Die Vorgaben des Erprobungsplans für die Sensoren 2 und/oder Aktoren werden über die Bedienschnittstelle des Simulators eingegeben. Zusätzlich zu den digitalen Parametern sind auch analoge Größen wie Lasten zu simulieren.

Sensoren 2 und/oder Aktoren müssen im Rahmen der Qualitätssicherung vor der Serienproduktion freigegeben, während der Produktion stichprobenartig geprüft und beanstandete Teile (Rückläufer) analysiert werden. Die Prüflinge sind in definierten Betriebszuständen bei unterschiedlichen Umweltbedingungen (z. B. Temperatur, Feuchtigkeit, Vibration) zu betreiben. Außerdem müssen die Sensoren 2 und/oder Aktoren am Bandende abgeglichen und kurz geprüft werden. Nach dem Einbau der Sensoren 2 und/oder Aktoren ins Endprodukt muss die korrekte Montage und Verkabelung sowie die Funktion ebenfalls geprüft werden. In allen Fällen ersetzt das Testgerät 1 das Steuergerät 3.

Bei Software-in-the-Loop-Simulationen (SIL) läuft das Steuerprogramm auf der übergeordneten Steuereinrichtung 13 anstelle des Steuergeräts 3. Zur Anbindung der Sensoren 2 und/oder Aktoren muss das Testgerät 1 eine Brücke zwischen SIL-Schnittstelle und proprietärer Sensorschnittstelle und/oder Aktorschnittstelle bilden.

Nach Änderungen am Sensor 2 und/oder Aktor ist dieser neu zu charakterisieren. Hierzu ist der Zugriff auf interne Größen des Sensors 2 notwendig. Dies erfolgt in der Regel mit einem geeigneten PC-Programm, das über das Testgerät 1 an die proprietäre Schnittstelle des Sensors 2 und/oder Aktor angebunden werden kann.

Die elektrischen Eigenschaften der Kabelverbindungen zwischen Steuergerät 3 und Sensoren 2 und/oder Aktoren müssen den Anforderungen entsprechen. Diese sollen durch das Testgerät 1 prüfbar sein.

Anstelle eines Oszilloskops soll die Kommunikation zwischen Steuergerät 3 und Sensoren 2 und/oder Aktoren gemessen, in Klartext übersetzt und aufgezeichnet werden können. Damit sollen Kommunikationsfehler leichter detektierbar sein. Die über kombinierte Spannungs-/Stromschnittstellen übertragenen Daten sollen parallel verarbeitet werden können.

Insbesondere lassen sich die folgenden Vorteile durch die Verwendung des Testgerätes 1 erreichen:
- Es kann ein echtzeitfähiges Gerät entsprechend der Anforderungen der Anwendung mit geringem Aufwand ohne zusätzliche Komponenten aufgebaut werden. Mechanik, Elektronik, PC-Schnittstelle, Datenspeicher und Bedienschnittstelle (Display, Einhand-Steuerung) sind verfügbar.
- Im Gegensatz zu Testplatinen und Einplatinen-Computern handelt es sich um ein robustes mechanisches Design für den industriellen Einsatz.
- Das Gerät ist gegen elektromagnetische Einwirkungen von außen geschützt. Ein solcher Schutz der Ein-/Ausgänge zu Sensoren und/oder Aktoren lässt sich im analogen Aufsteckmodul integrieren. Beispielhaft ist dies umgesetzt im Validationsmodul.
- Das Gerät ist für einen großen Temperaturbereich von [-20°C, 70°C] ausgelegt und damit für den Einsatz in Fahrzeugen geeignet (Stabilität, Beständigkeit).
- Die wechselbare digitale Schnittstelle (PC-Schnittstelle) ist viel robuster als eine Vielzahl an Schnittstellen auf einer Testplatine oder einem EinplatinenComputer. Die Einfachheit reduziert die Möglichkeit der Fehlbedienung. Einkopplung, elektrisches Übersprechen und andere Effekte sind durch gute Schirmung der Daten-Leitungen und Hochfrequenz-Design ausgeschlossen.
- Eine Vielzahl von Anwendungen mit proprietärer Kommunikationsschnittstelle kann über die analoge Schnittstelle realisiert werden (Adaptionsfähigkeit). Dies kann über diskrete Bauelemente (Beispiel: Simulation Interface) ebenso umgesetzt werden wie durch ASICs (Beispiel: ADTF Interface). Über die analoge Schnittstelle können Sensoren und/oder Aktoren auch mit Spannung versorgt werden.
- Die Leitungen zwischen der Steuereinheit und der analogen Schnittstelle, insbesondere der in der analogen Schnittstelle verwendeten Einheit, sind frei belegbar (Adaptionsfähigkeit).
- Das Gerät kann durch Austausch der Firmware (z.B. über SD-Karte mittels der Datenträgerschnittstelle), ggf. der analogen Schnittstelle und ggf. der digitalen Schnittstelle mit geringem Aufwand umgebaut werden. Dies spart Kosten für Umbau oder zusätzliche Geräte.
- Das Konzept vereint Steuereinheit und Sensorsimulator und/oder Aktorsimulator. Damit lassen sich viele verschiedene Prüfstände/Prüfgeräte bauen, für Steuereinheit und Sensoren und/oder Aktoren in Entwicklung, Produktion und beim Endkunden (Mehrfachnutzen).
- Mit dem Baukasten lässt sich eine Geräte-Familie mit vielen Gleichteilen der Hardware, der Firmware sowie der PC-Software realisieren. Insbesondere die tiefen Softwareschichten für die Kommunikation zwischen Steuereinheit und Sensoren und/oder Aktoren können widerverwendet werden. Damit lassen sich hohe Einsparungen in der Entwicklung, der Wartung, dem Training des Bedienpersonals, dem Support sowie bei der Beschaffung (hohe Stückzahl) erzielen.
- Falls durch Weiterentwicklung (z. B. neue Musterstufe des ASICs, neue Anforderungen) Änderungen an der Hardware oder der Firmware notwendig sind, können alle unterschiedlichen Geräte einer Familie mit einem Mal aktualisiert werden. Dadurch werden Fehlereinflussmöglichkeiten reduziert und Kosten eingespart.
- Es können vollständig autonome Geräte ohne PC-Anbindung aufgebaut werden. Dies reduziert die Kosten und Fehlereinflussmöglichkeiten von Dauerlaufprüfungen.
- Der Einhand-Wahlschalter in Kombination mit einem OLED-Display ermöglicht eine intuitive Bedienung.
- Firmware-Updates sind sehr einfach über den Tausch der SD-Karte möglich. Dies ermöglicht eine einfache Fernwartung. Die Firmware kann elektronisch an den Nutzer gesandt werden.
- Konfigurationsparameter und Daten können in beliebigen Dateiformaten auf der SD-Karte, gespeichert und am PC ausgelesen/verändert werden.
- Wegen der Modularität ist das Gerät instandsetzungsfreundlich. Reparaturen beschränken sich meist auf den Tausch eines Moduls.

## Patentansprüche

1. Testgerät (1) zum Testen von Sensoren (2) und/oder Aktoren sowie Steuergeräten (3) für Sensoren (2) und/oder Aktoren, umfassend
• eine analoge Schnittstelle (4) zum Verbinden mit zumindest einem Sensor (2) und/oder Aktor und zumindest einem Steuergerät (3),
• eine digitale Schnittstelle (5) zum Verbinden mit einer übergeordneten Steuervorrichtung (13), und
• eine Steuereinheit (6) zum Signalaustausch mit dem Sensor (2) und/oder Aktor, dem Steuergerät (3) und der übergeordneten Steuervorrichtung (13),
wobei die Steuereinheit (6) eingerichtet ist, wahlweise
• ein Verhalten eines Steuergeräts (3) zu simulieren, wenn zumindest ein Sensor (2) und/oder Aktor mit der analogen Schnittstelle (4) verbunden ist,
• ein Verhalten zumindest eines Sensors (2) und/oder Aktors zu simulieren, wenn zumindest ein Steuergerät (3) mit der analogen Schnittstelle (4) verbunden ist, und
• eine Kommunikation zwischen zumindest einem mit der analogen Schnittstelle (4) verbundenen Sensor (2) und/oder Aktor und einer mit der digitalen Schnittstelle (5) verbundenen übergeordneten Steuervorrichtung (13), wobei die übergeordnete Steuervorrichtung (13) ein Steuergerät (3) simuliert, aufzuzeichnen.

2. Testgerät (1) nach einem der vorhergehenden Ansprüche, **dadurch gekennzeichnet, dass** die analoge Schnittstelle (4) eine Simulationseinheit (7) umfasst, wobei die Simulationseinheit (7) einen Pegelwandler für Spannungssignale von einem mit der analogen Schnittstelle (4) verbundenen Steuergerät (3) und für Stromsignale von zumindest einem von der Steuereinheit (6) simulierten Sensor (2) und/oder Aktor sowie eine Lastsimulation eines von dem mit der analogen Schnittstelle (4) verbundenen Steuergerät (3) angesteuerten simulierten Sensors (2) und/oder Aktors aufweist.

3. Testgerät (1) nach einem der vorhergehenden Ansprüche, **dadurch gekennzeichnet, dass** die analoge Schnittstelle (4) eine Validationseinheit (8) umfasst, wobei die Validationseinheit (8) einen Pegelwandler für Spannungssignale von einem, von der Steuereinheit (6) simulierten, Steuergerät (3) und für Stromsignale von zumindest einem, mit der analogen Schnittstelle (4) verbundenen, Sensor (2) und/oder Aktor, sowie eine Spannungsversorgung des zumindest einen Sensors (2) und/oder Aktors aufweist.

4. Testgerät (1) nach Anspruch 3, **dadurch gekennzeichnet, dass** die Validationseinheit (8) eine Überspannungsschutzschaltung, mit der das Testgerät (1) vor an der analogen Schnittstelle (4) angeschlossenen Sensoren (2) und/oder Aktoren geschützt ist, und/oder eine Echtzeituhr und/oder einen Temperatursensor und/oder Feuchtesensor und/oder Dampfdrucksensor und/oder einen Positionssensor und/oder einen Beschleunigungssensor und/oder eine Einheit zur Auswertung von Signalen mindestens eines angeschlossenen Referenz-Sensors aufweist.

5. Testgerät (1) nach einem der vorhergehenden Ansprüche, **dadurch gekennzeichnet, dass** die analoge Schnittstelle (4) eine Sensor-/Aktor-Verbindungseinheit (9) umfasst, wobei die Sensor-/Aktor-Verbindungseinheit (9) einen Pegelwandler für Spannungssignale von einem, durch eine über die digitale Schnittstelle (5) verbundene übergeordnete Steuervorrichtung (13) simulierten, Steuergerät (3) und für Stromsignale von zumindest einem mit der analogen Schnittstelle (4) verbundenen Sensor (2) und/oder Aktor, sowie eine Spannungsversorgung des zumindest einen Sensors (2) und/oder Aktors aufweist.

6. Testgerät (1) nach einem der vorhergehenden Ansprüche, **dadurch gekennzeichnet, dass** die analoge Schnittstelle (4) eine Kabelbaumtesteinheit (10) umfasst, wobei die Kabelbaumtesteinheit (10) einen Pegelwandler für Spannungssignale von einem entweder von einer über die digitale Schnittstelle (5) verbundenen übergeordneten Steuervorrichtung (13) oder von der Steuereinheit (6) simulierten Steuergerät (3) und für Stromsignale von zumindest einem mit der analogen Schnittstelle (4) verbundenen Sensor (2) und/oder Aktor, eine Spannungsversorgung des zumindest einen Sensors (2) und/oder Aktors, sowie eine Messvorrichtung zum Ermitteln von elektrischen Eigenschaften der Stromsignale und der Spannungssignale aufweist.

7. Testgerät (1) nach einem der vorhergehenden Ansprüche, **dadurch gekennzeichnet, dass** die analoge Schnittstelle (4) eine Loggingeinheit aufweist, wobei die Loggingeinheit eine Schaltung umfasst, die unterschiedliche Eingänge und/oder Ausgänge der analogen Schnittstelle (4) miteinander verbindet und die Signale von den Eingängen und/oder Ausgängen der analogen Schnittstelle (4) auskoppelt und insbesondere aufzeichnet.

8. Testgerät (1) nach einem der vorhergehenden Ansprüche, **dadurch gekennzeichnet, dass** die analoge Schnittstelle (4) eine Steckerverbindung (11) zum Anschließen des zumindest einen Sensors (2) und/oder Aktors und des Steuergeräts (3) aufweist, wobei wahlweise die Simulationseinheit (7) und/oder die Validationseinheit (8) und/oder Sensor-/Aktor-Verbindungseinheit (9) und/oder Kabelbaumtesteinheit (10) als separate Elemente zur Datenübertragung zwischen die Steckerverbindung (11) und die Steuereinheit (6) einbringbar sind.

9. Testgerät (1) nach einem der vorhergehenden Ansprüche, **dadurch gekennzeichnet, dass** die digitale Schnittstelle (5) genau einen Verbindungsanschluss (12) zum Verbinden mit der übergeordneten Steuervorrichtung (13), insbesondere einer elektronischen Datenverarbeitungsanlage, aufweist.

10. Testgerät (1) nach einem der vorhergehenden Ansprüche, **dadurch gekennzeichnet, dass** die digitale Schnittstelle (5) einen separaten Adapter (14) umfassend den Verbindungsanschluss (12) aufweist, wobei der Adapter (14) insbesondere einen USB-Anschluss, oder einen CAN-Anschluss, oder einen Ethernet-Anschluss, oder einen RS-232-Anschluss oder einen IEEE 802.11-Anschluss oder einen IEEE 802.15.1-Anschluss oder einen RS-485-Anschluss als Verbindungsanschluss (12) aufweist.

11. Testgerät (1) nach einem der vorhergehenden Ansprüche, **gekennzeichnet durch** eine Anzeigevorrichtung (15) zum Anzeigen von durch die Steuereinheit (6) generierten Informationen und eine Eingabevorrichtung (16) zum Eingeben von Befehlen an die Steuereinheit (6).
